# EUROPEAN PATENT APPLICATION

(11) **EP 2 921 707 A1**
(43) Date of publication of application: **23.09.2015**
(21) Application number: 15158179.0
(22) Date of filing: 09.03.2015
(51) Int. Cl.: F04D 17/12, F04D 25/06, F04D 29/58, F25B 1/053, F25B 31/00, H02K 9/12

(54) **Motor-driven turbo compressor**

(30) Priority: 19.03.2014 JP 2014056133
(71) Applicant: Kabushiki Kaisha Toyota Jidoshokki, Kariya-shi, Aichi-ken (JP)
(72) Inventor: Hoshino, Nobuaki, Aichi-ken (JP); Fujii, Toshiro, Aichi-ken (JP); Kurita, Hajime, Aichi-ken (JP); Yokoi, Hironao, Aichi-ken (JP)
(74) Representative: Hoffmann Eitle

(57) **Abstract**

To provide a motor-driven turbo compressor that has high durability and is capable of surely improving efficiency of a refrigeration circuit. In the compressor of the present invention, an intermediate pressure port 31 through which a first discharge chamber 25 and a first chamber 29a communicate with each other is formed in a front housing 11. In the front housing 11, an injection port 43 through which a receiver 103 and a second chamber 29b communicate with each other is formed. An intermediate pressure refrigerant discharged to the first discharge chamber 25 flows into the first chamber 29a through an intermediate pressure port 31. An injection refrigerant separated by the receiver 103 flows into the second chamber 29b. In the compressor, it is possible to cool an electric motor 5 with the intermediate pressure refrigerant and the injection refrigerant. The intermediate pressure refrigerant and the injection refrigerant circulate through a second suction port 37 as a mixed refrigerant. Therefore, in the compressor, it is possible to suitably suppress a temperature rise of the mixed refrigerant when the mixed refrigerant flows into a second impeller chamber 19.

## Description

### TECHNICAL FIELD

The present invention relates to a motor-driven turbo compressor.

### BACKGROUND ART

Japanese Patent No. 4947405 discloses a conventional motor-driven turbo compressor (hereinafter referred to as compressor). The compressor is adopted in a refrigeration circuit of an air-conditioning apparatus. The compressor includes a housing, a rotating shaft, an electric motor, a first impeller, and a second impeller.

In the housing, a first impeller chamber, a second impeller chamber, and a motor chamber are formed in this order in the axial direction from one end side toward the other end side. Further, in the housing, first and second diffusers and first and second discharge chambers are formed. The first discharge chamber communicates with the first impeller chamber via the first diffuser. The second discharge chamber communicates with the second impeller chamber via the second diffuser. Further, in the housing, first and second suction ports and a gas injection portion are formed. The first suction port extends in the axial direction on the one end side of the housing and communicates with the first impeller chamber. The second suction port communicates with the first discharge chamber on one end side and communicates with the second impeller chamber on the other end side. The second suction port does not communicate with the motor chamber. The gas injection portion communicates with the second suction port.

The refrigeration circuit includes, besides the compressor, a condenser, first and second expansion valves, an economizer, and an evaporator, which are connected by pipes to enable a refrigerant to circulate therethrough. The economizer is arranged between the first expansion valve and the second expansion valve. While temporarily storing the refrigerant decompressed by the first expansion valve, the economizer cools the stored refrigerant. The economizer is connected to the gas injection portion of the compressor by a pipe.

The rotating shaft is rotatably supported by the housing. The electric motor is provided in the motor chamber and drives to rotate the rotating shaft. The first impeller is coupled to one end of the rotating shaft. The first impeller rotates in the first impeller chamber to thereby increase kinetic energy of a refrigerant in the first impeller chamber. Thereafter, the first impeller converts the kinetic energy of the refrigerant into pressure energy through the first diffuser, and compresses the refrigerant, and discharges the compressed refrigerant to the first discharge chamber. The second impeller is coupled to the other end of the rotating shaft. The second impeller rotates in the second impeller chamber to thereby increase kinetic energy of the refrigerant in the second impeller chamber. Thereafter, the second impeller converts the kinetic energy of the refrigerant into pressure energy through the second diffuser, and compresses the refrigerant, and discharges the compressed refrigerant to the second discharge chamber.

The compressor compresses the refrigerant in two stages. Specifically, the refrigerant is sucked from the first suction port. The refrigerant is discharged to the first discharge chamber through the first impeller chamber and the first diffuser, and circulates through the second suction port. Further, in the compressor, a gas-phase refrigerant in the economizer is supplied from the gas injection portion to the second suction port. In this way, in the compressor, the refrigerant discharged to the first discharge chamber and the gas-phase refrigerant in the economizer are mixed in the second suction port, and discharged to the second discharge chamber through the second impeller chamber and the second diffuser.

However, in the compressor as explained above, the electric motor can drive to rotate the rotating shaft at high speed. Therefore, deterioration in durability of the electric motor due to heat generation is concerned. In the compressor, the refrigerant circulating through the second suction port is unnecessarily heated by passing from the electric motor having high temperature through the housing. Therefore, the temperature of the refrigerant rises when the refrigerant flows into the second impeller chamber from the second suction port. As a result, efficiency of the refrigeration circuit adopting the compressor is deteriorated.

The present invention has been devised in view of the circumstances in the past and an object of the invention is to provide a motor-driven turbo compressor that has high durability and is capable of surely improving efficiency of a refrigeration circuit.

### SUMMARY OF THE INVENTION

The motor-driven turbo compressor of the invention is used in a refrigeration cycle and comprises: a housing; an electric motor provided in the housing; a rotating shaft driven to rotate by the electric motor; and a first impeller and a second impeller arranged on the rotating shaft at an interval in an axial direction of the rotating shaft. A refrigerant is sucked from a first suction port, compressed by rotation of the first impeller, and discharged to a first discharge chamber provided on a radially outer circumference side of the first impeller. The refrigerant through the first discharge chamber is sucked from a second suction port, compressed by rotation of the second impeller, and discharged to a second discharge chamber provided on a radially outer circumference side of the second impeller. The first impeller, the second impeller, and the electric motor are arranged in the axial direction of the rotating shaft in this order. A first chamber and a second chamber are formed at both ends in the axial direction of the electric motor in the housing and communicate with each other via a gap in the electric motor, and the first chamber is located close to the second impeller in the axial direction of the electric motor. An intermediate pressure port is formed in the housing and connects the first chamber and the first discharge chamber. An injection port connected to a gas-liquid separator of the refrigeration cycle is formed in the housing and communicates with the second chamber.

Other aspects and advantages of the present invention will be apparent from the embodiments disclosed in the following description and the attached drawings, the illustrations exemplified in the drawings, and the concept of the invention disclosed in the entire description and drawings.

### BRIEF DESCRIPTION OF THE DRAWINGS

FIG. 1 is a sectional view showing a compressor in an embodiment.
FIG. 2 is a sectional view from a II-II direction in FIG. 1 according to the compressor of embodiment.
FIG. 3 is a sectional view from a III-III direction in FIG. 1 according to the compressor of embodiment.
FIG. 4 is a sectional view from the direction same as the direction in FIG. 2 according to the compressor of embodiment.
FIG. 5 is a sectional view from a V-V direction in FIG. 1 according to the compressor of embodiment.

### DETAILED DESCRIPTION OF EXEMPLARY EMBODIMENTS

An embodiment embodying the present invention is explained below with reference to the drawings. A compressor in the embodiment is a motor-driven turbo compressor for a vehicle. The compressor is mounted on a vehicle and used in a refrigeration cycle of an air conditioner for a vehicle.

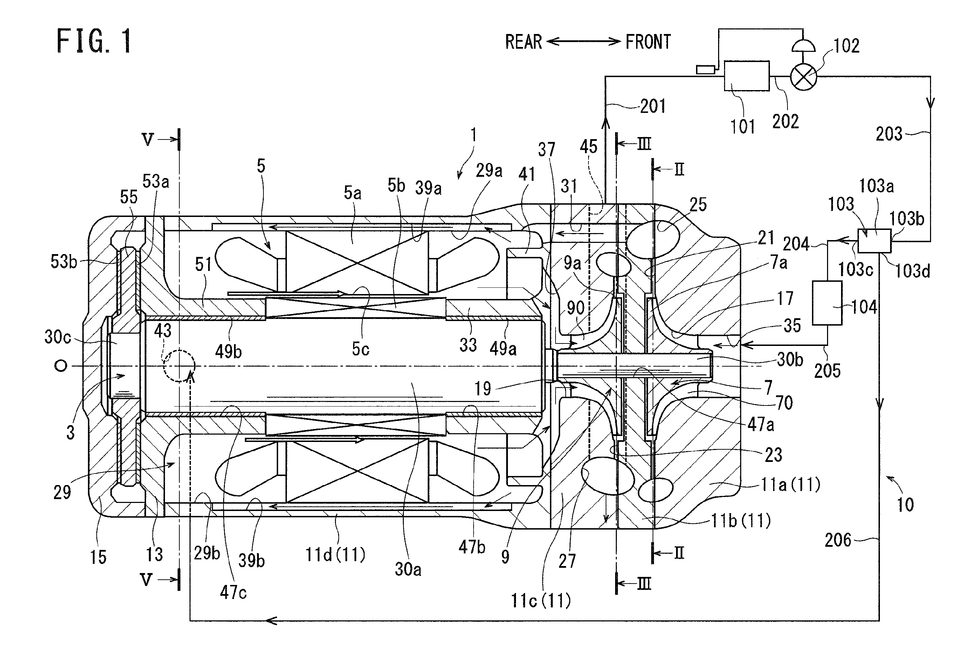

As shown in FIG. 1, the compressor in the embodiment includes a housing 1, a rotating shaft 3, an electric motor 5, a first impeller 7, and a second impeller 9.

The housing 1 includes a front housing 11, an end plate 13, and a rear housing 15.

The front housing 11 includes a first front housing 11a, a second front housing 11b, a third front housing 11c, and a fourth front housing 11d. In the front housing 11, the first front housing 11a, the second front housing 11b, the third front housing 11c, and the fourth front housing 11d are joined in this order from the front end side toward the rear end side. The front housing 11 is formed into a substantially cylindrical shape as a whole.

In the front housing 11, first and second impeller chambers 17 and 19, first and second diffusers 21 and 23, first and second discharge chambers 25 and 27, a motor chamber 29, an intermediate pressure port 31, a first boss 33, first and second suction ports 35 and 37, first and second communication paths 39a and 39b, a guide wall 41, an injection port 43, and a discharge port 45 are formed.

The first impeller chamber 17 is formed on the front end side of the front housing 11. More specifically, the front end side of the first impeller chamber 17 is formed in the first front housing 11a. The rear end side of the first impeller chamber 17 is formed in the second front housing 11b. The first impeller chamber 17 is formed in a shape gradually expanding in diameter from the front end side toward the rear end side. The first impeller 7 is provided in the first impeller chamber 17.

The second impeller chamber 19 is formed behind the first impeller chamber 17 in the front housing 11. More specifically, the front end side of the second impeller chamber 17 is formed in the second front housing 11b. The rear end side of the second impeller chamber 17 is formed in the third front housing 11c. The second impeller chamber 19 has a shape symmetric to the first impeller chamber 17. The second impeller chamber 19 is formed in a shape gradually contracting in diameter from the front end side toward the rear end side. The second impeller 9 is provided in the second impeller chamber 19. In the second front housing 11b, a first shaft hole 47a extending in the axial direction of the housing 1 is formed.

The first diffuser 21 is formed on the front end side of the second front housing 11b and located on the outer circumference side of the first impeller chamber 17. The first diffuser 21 communicates with the first impeller chamber 17 in a largest diameter part of the first impeller chamber 17. The second diffuser 23 is formed on the front end side of the third front housing 11c and located on the outer circumference side of the second impeller chamber 19. The second diffuser 23 communicates with the second impeller chamber 19 in a largest diameter part of the second impeller chamber 19. The second diffuser 23 is formed smaller in diameter than the first diffuser 21.

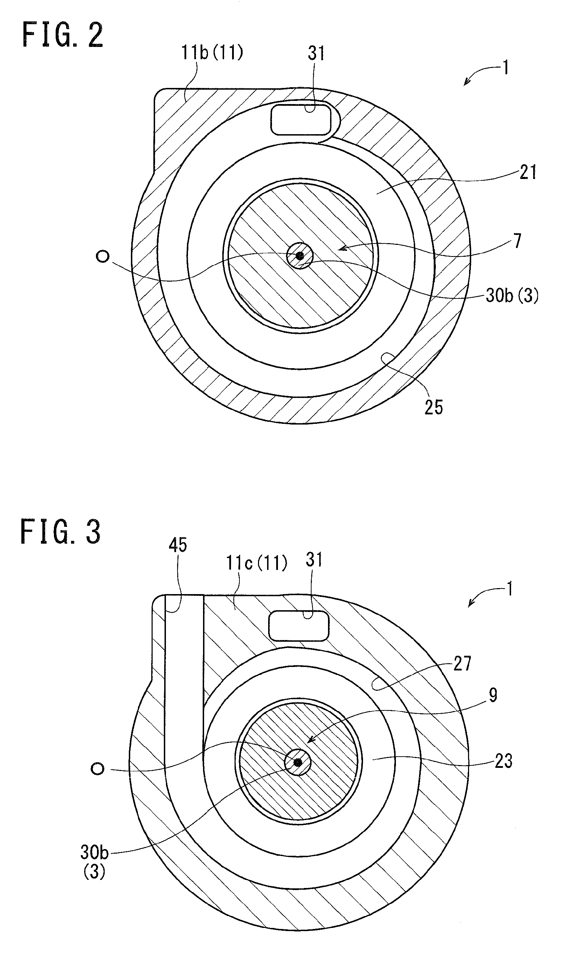

The front end side of the first discharge chamber 25 is formed in the first front housing 11a. The rear end side of the first discharge chamber 25 is formed in the second front housing 11b. The first discharge chamber 25 is provided on a radially outer circumference side of the first impeller 7. As shown in FIG. 2, the first discharge chamber 25 is located on the outer circumference side of the first diffuser 21 and communicates with the first diffuser 21. Consequently, the first impeller chamber 17 and the first discharge chamber 25 communicate with each other through the first diffuser 21. The first discharge chamber 25 is formed into a spiral shape. The first discharge chamber 25 is formed such that flow passage area gradually increases.

As shown in FIG. 1, the front side of the second discharge chamber 27 is formed in the second front housing 11b. The rear end side of the second discharge chamber 27 is formed in the third front housing 11c. The second discharge chamber 27 is provided on a radially outer circumference side of the second impeller 9. As shown in FIG. 3, the second discharge chamber 27 is located on the outer circumference side of the second diffuser 23 and communicates with the second diffuser 23. Consequently, the second impeller chamber 19 and the second discharge chamber 27 communicate with each other through the second diffuser 23. Like the first discharge chamber 25, the second discharge chamber 27 is formed into a spiral shape. The second discharge chamber 27 is formed such that flow passage area gradually increases.

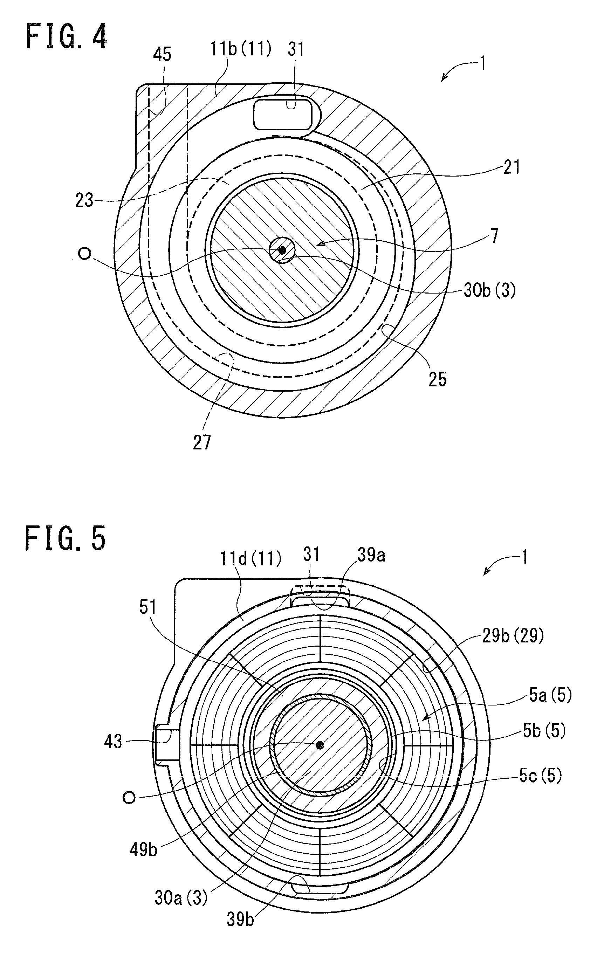

Here, as explained above, the second diffuser 23 is smaller in diameter than the first diffuser 21. Therefore, as shown in FIG. 4, the second discharge chamber 27 is located closer to the inner circumference of the front housing 11 than the first discharge chamber 25. Further, as shown in FIG. 3, the second discharge chamber 27 communicates with the discharge port 45 on the outer circumference side. The discharge port 45 extends in the radial direction of the housing 1.

As shown in FIG. 1, the motor chamber 29 is formed in the fourth front housing 11d. Consequently, in the front housing 11, the first impeller chamber 17, the second impeller chamber 19, and the motor chamber 29 are formed in this order from the front end side toward the rear end side. The motor chamber 29 extends in the axial direction of the housing 1 and defined by the end plate 13 on the rear end side of the fourth front housing 11d.

The intermediate pressure port 31 is formed to extend across the second to fourth front housings 11b to 11d in the axial direction of the housing 1. As shown in FIG. 2, in the second front housing 11b, the front end side of the intermediate pressure port 31 communicates with the outer circumference side of the first discharge chamber 25. On the other hand, as shown in FIG. 1, in the fourth front housing 11d, the rear end side of the intermediate pressure port 31 communicates with the motor chamber 29. Further, as shown in FIG. 4, in the front housing 11, the intermediate pressure port 31 and the discharge port 45 are formed in positions shifted in the radial direction.

As shown in FIG. 1, the first boss 33 is formed on the front end side of the motor chamber 29 in the fourth front housing 11d and extends toward the rear end side of the motor chamber 29 in the axial direction of the housing 1. In the first boss 33, a second shaft hole 47b extending in the axial direction of the housing 1 is formed. In the second shaft hole 47b, a first radial foil bearing 49a is provided.

The first suction port 35 is formed on the front end side of the first front housing 11a. That is, the first suction port 35 is located on the front end side of the housing 1. The first suction port 35 extends in the axial direction of the housing 1. The front end side of the first suction port 35 opens on the front end face of the first front housing 11a. The rear end side of the first suction port 35 communicates with the first impeller chamber 17.

The second suction port 37 is formed to extend across the rear end side of the third front housing 11c and the front end side of the fourth front housing 11d. The rear end side of the second suction port 37 communicates with the motor chamber 29 on the front end side of the first boss 33. On the other hand, the front end side of the second suction port 37 communicates with the second impeller chamber 19. Further, the second suction port 37 communicates with the second shaft hole 47b. The second suction port 37 faces the rotating shaft 3 such that the refrigerant is brought into contact with the rotating shaft 3.

Both of the first communication path 39a and the second communication path 39b are formed in the fourth front housing 11d and extend from the front end side toward the rear end side of the motor chamber 29 in the axial direction of the housing 1. More specifically, the first communication path 39a and the second communication path 39b are respectively located between the inner wall of the motor chamber 29 and a stator 5a explained below. As shown in FIG. 5, the first communication path 39a and the second communication path 39b are arranged to face each other across the electric motor 5 in the motor chamber 29. It is possible to form only one of the first communication path 39a and the second communication path 39b in the fourth front housing 11d. Further, three or more communication paths may be formed in the fourth front housing 11d.

As shown in FIG. 1, the guide wall 41 is formed on the front end side of the motor chamber 29 in the fourth front housing 11d. The guide wall 41 is formed further on the outer circumference side than the first boss 33 in the fourth front housing 11d. The guide wall 41 extends toward the rear end side of the motor chamber 29 in the axial direction of the housing 1.

The injection port 43 is formed on the rear end side of the fourth front housing 11d. As shown in FIG. 5, the injection port 43 extends in the radial direction of the housing 1 with respect to the fourth front housing 11d. That is, in the compressor, the first and second communication paths 39a and 39b extending in the axial direction of the housing 1 and the injection port 43 extending in the radial direction of the housing 1 do not face each other. Further, the injection port 43 is located at a position different from the intermediate pressure port 31 and the first and second communication paths 39a and 39b around the axis of the rotating shaft 3.

The end plate 13 is joined to the rear end of the fourth front housing 11d, that is, the rear end of the front housing 11. The rear end of the motor chamber 29 is defined by the end plate 13. In the end plate 13, a second boss 51 extending toward the motor chamber 29 in the axial direction of the housing 1 is formed. In the second boss 51, a third shaft hole 47c extending in the axial direction of the housing 1 is formed. In the third shaft hole 47c, a second radial foil bearing 49b is provided.

The rear housing 15 is located in the rear of the housing 1 and joined to the end plate 13. That is, the rear housing 15 sandwiches the end plate 13 in conjunction with the front housing 11. In the rear housing 15, first and second thrust foil bearings 53a and 53b and a support plate 55 are provided. The first thrust foil bearing 53a is located on the front end side of the support plate 55 and sandwiched by the end plate 13 and the support plate 55. The second thrust foil bearing 53b is located on the rear end side of the support plate 55 and sandwiched by the support plate 55 and the rear housing 15.

The rotating shaft 3 includes a rotating shaft main body 30a, a first small diameter portion 30b located on the front end side of the rotating shaft main body 30a, and a second small diameter portion 30c located on the rear end side of the rotating shaft main body 30. The rotating shaft main body 30a is formed in a largest diameter in the rotating shaft 3. On the other hand, both of the first and second small diameter portions 30b and 30c are formed smaller in diameter than the rotating shaft main body 30a. The first small diameter portion 30b is formed in diameter smaller than the second small diameter portion 30c.

The rotating shaft 3 is inserted through the housing 1 and is capable of rotating in the housing 1. Specifically, the front end side of the rotating shaft main body 30a is inserted through the second shaft hole 47b and rotatably supported by the first radial foil bearing 49a. On the other hand, the rear end side of the rotating shaft main body 30a is inserted through the third shaft hole 47c and rotatably supported by the second radial foil bearing 49b. Further, the first small diameter portion 30b is inserted through the first shaft hole 47a. The rear end side of the first small diameter portion 30b is located in the second suction port 37. The second small diameter portion 30c is inserted through the support plate 55 in the rear housing 15. Consequently, the second small diameter portion 30c and further, the rotating shaft 3 are supported by the first and second thrust foil bearings 53a and 53b via the support plate 55.

The electric motor 5 is provided in the motor chamber 29. The electric motor 5 includes a stator 5a and a rotor 5b. Since the electric motor 5 is provided in this way, the motor chamber 29 is defined into a first chamber 29a and a second chamber 29b respectively located at the axial direction both ends of the electric motor 5. The first chamber 29a is located on the front end side in the axial direction of the electric motor 5 and is located closer to the second impeller chamber 19 than the stator 5a and the rotor 5b. The second chamber 29b is located on the rear end side in the axial direction of the electric motor 5 and is located on the opposite side of the second impeller chamber 19 with respect to the stator 5a and the rotor 5b, that is, closer to the end plate 13 than the stator 5a and the rotor 5b. The first chamber 29a communicates with the first discharge chamber 25 in the axial direction through the intermediate pressure port 31. Further, the first chamber 29a communicates with the second shaft hole 47b and the second impeller chamber 19 through the second suction port 37. On the other hand, the second chamber 29b communicates with the injection port 43.

The stator 5a is fixed to the inner wall of the motor chamber 29. The stator 5a is electrically connected to a not-shown battery. The rotor 5b is located on the inner circumference side of the stator 5a. In the motor chamber 29, the rotor 5b is arranged between the first boss 33 and the second boss 51. The rotor 5b is fixed to the rotating shaft main body 30a. Consequently, the rotor 5b is capable of rotating integrally with the rotating shaft 3 on the inner circumference side of the stator 5a. Here, a gap 5c is provided between the stator 5a and the rotor 5b. The first chamber 29a and the second chamber 29b communicate with each other through the gap 5c. Note that, in FIGS. 1 and 5, the shapes of the stator 5a and the rotor 5b are shown in a simplified form in order to facilitate explanation.

The first impeller 7 is press-fitted into the front end side of the first small diameter portion 30b and provided in the first impeller chamber 17. Consequently, the first impeller 7 is capable of rotating in the first impeller chamber 17 according to the rotation of the rotating shaft 3. The first impeller 7 is formed in diameter smaller than the inner diameter of the motor chamber 29. The first impeller 7 is formed in a shape gradually expanding in diameter from the front end side toward the rear end side. The rear end side of the first impeller 7 is formed as a large diameter portion 7a. Further, a plurality of blades 70 are provided at a predetermined interval on the surface of the first impeller 7.

The second impeller 9 is press-fitted into the rear end side of the first small diameter portion 30b and provided in the second impeller chamber 19. Consequently, the second impeller 9 is capable of rotating in the second impeller chamber 19 according to the rotation of the rotating shaft 3. In this way, in the compressor, the first impeller 7, the second impeller 9, and the electric motor 5 are arranged in this order in the axial direction of the rotating shaft 3 from the front end side toward the rear end side.

The second impeller 9 is also formed in diameter smaller than the inner diameter of the motor chamber 29. Further, the second impeller 9 is formed to have the same size as the first impeller 7. The second impeller 9 is provided in the first small diameter portion 30b such that a large diameter portion 9a of the second impeller 9 is located on the front end side of the front housing 11. Consequently, in the compressor, in the front housing 11, the first impeller 7 and the second impeller 9 are arranged with the large diameter portion 7a and the large diameter portion 9a faced to each other. Further, a plurality of blades 90 are provided at a predetermined interval on the surface of the second impeller 9. Note that the second impeller 9 may be formed in a smaller diameter than the first impeller 7.

The refrigeration cycle 10 is configured by a condenser 101, an expansion valve 102, a receiver 103, an evaporator 104, and pipes 201 to 206 besides the compressor. The receiver 103 corresponds to the gas-liquid separator in the present invention. The receiver 103 includes a gas-liquid separation chamber 103a. In the receiver 103, an inlet 103b, an outlet 103c, and a gas outlet 103d are formed. The gas-liquid separation chamber 103a separates a refrigerant flown into from the inlet 103b into a gas-phase refrigerant and a liquid-phase refrigerant, and temporarily stores the liquid-phase refrigerant. The liquid-phase refrigerant in the gas-liquid separation chamber 103a flows out from the inside of the gas-liquid separation chamber 103a through the outlet 103c. On the other hand, the gas-phase refrigerant in the gas-liquid separation chamber 103a, that is, an injection refrigerant flows out from the inside of the gas-liquid separation chamber 103a through the gas outlet 103d.

Here, since the refrigeration cycle 10 is mounted on a vehicle, there is a strong demand for a reduction in the size of the refrigeration cycle 10. Therefore, in the refrigeration cycle 10, a device such as an economizer is not adopted to perform the gas-liquid separation of the refrigerant. Instead, the receiver 103 is adopted to perform the gas-liquid separation of the refrigerant.

The discharge port 45 of the compressor and the condenser 101 are connected by a pipe 201. The condenser 101 is connected to the expansion valve 102 by a pipe 202. The expansion valve 102 is connected to the inlet 103b of the receiver 103 by a pipe 203. The outlet 103c of the receiver 103 is connected to the evaporator 104 by a pipe 204. The evaporator 104 is connected to the first suction port 35 of the compressor by a pipe 205. Further, the gas outlet 103d of the receiver 103 is connected to the injection port 43 of the compressor by a pipe 206. In this way, the gas-liquid separation chamber 103a and the second chamber 29b communicate with each other.

In the compressor configured as explained above, the stator 5a rotates the rotor 5b by electricity of motor 5. Consequently, the rotating shaft 3 is driven to rotate around a rotational axis O in the housing 1. Therefore, the first impeller 7 rotates in the first impeller chamber 17. The second impeller 9 rotates in the second impeller chamber 19.

Further, a low-pressure refrigerant that passes through the evaporator 104 is sucked into the first suction port 35 through the pipe 205 and reaches the inside of the first impeller chamber 17. The first impeller 7 rotating in the first impeller chamber 17 increases kinetic energy of the refrigerant in the first impeller chamber 17. Thereafter, the first impeller 7 converts the kinetic energy of the refrigerant into pressure energy through the first diffuser21, and compresses the refrigerant, and discharges the compressed refrigerant to the first discharge chamber 25. Consequently, the pressure of the refrigerant in the first discharge chamber 25 changes to an intermediate pressure. The refrigerant having the intermediate pressure, that is, an intermediate pressure refrigerant circulates from the first discharge chamber 25 to the first chamber 29a through the intermediate pressure port 31 as indicated by a solid line arrow in the FIG.1. Here, in the compressor, in the front housing 11, the intermediate pressure port 31 extends in the axial direction of the housing 1. Therefore, in the compressor, it is possible to reduce a body diameter even if the intermediate pressure port 31 is provided to cause the first discharge chamber 25 and the first chamber 29a to communicate with each other.

The intermediate pressure refrigerant flown into the first chamber 29a is guided to the first communication path 39a and the second communication path 39b by the guide wall 41. The intermediate pressure refrigerant circulates through the first communication path 39a and the second communication path 39b toward the second chamber 29b. In this case, the intermediate pressure refrigerant circulates from the first chamber 29a to the second chamber 29b in the axial direction of the housing 1 while cooling the stator 5a.

Further, in the compressor, the injection refrigerant separated by the gas-liquid separation chamber 103a of the receiver 103 circulates through the pipe 206 and flows into the second chamber 29b through the injection port 43 as indicated by an arrow in the FIG. 1. In this case, since the injection port 43 extends in the radial direction of the housing 1, the injection refrigerant flows into the second chamber 29b in the radial direction of the housing 1, that is, a direction orthogonal to the intermediate pressure refrigerant circulating through the first and second communication paths 39a and 39b. Therefore, in the compressor, it is possible to suitably suppress a collision of the intermediate pressure refrigerant circulating through the first and second communication paths 39a and 39b and flowing into the second chamber 29b and the injection refrigerant flowing into the second chamber 29b from the injection port 43. Consequently, in the compressor, the intermediate pressure refrigerant and the injection refrigerant suitably flow into the second chamber 29b.

The intermediate pressure refrigerant and the injection refrigerant are mixed in the second chamber 29b to be a mixed refrigerant. The mixed refrigerant circulates through the gap 5c between the stator 5a and the rotor 5b and circulates toward the first chamber 29a. In this case, the stator 5a and the rotor 5b are also cooled by the mixed refrigerant circulating through the gap 5c. The mixed refrigerant reaching the first chamber 29a flows into the second suction port 37.

The mixed refrigerant circulating through the second suction port 37 is sucked into the second impeller chamber 19 while coming into contact with the first small diameter portion 30b of the rotating shaft 3. In this case, in the compressor, it is possible to cool the rotating shaft 3 with the mixed refrigerant circulating through the second suction port 37.

The second impeller 9 rotating in the second impeller chamber 19 increases kinetic energy of the mixed refrigerant in the second impeller chamber 19. Thereafter, the second impeller 9 converts the kinetic energy of the refrigerant into pressure energy through the second diffuser 23, and compresses the refrigerant, and discharges the compressed refrigerant to the second discharge chamber 27. In this way, in the compressor, the refrigerant sucked from the first suction port 35 is compressed in two stages, and the injection refrigerant as the mixed refrigerant also is compressed.

As explained above, in the compressor, the electric motor 5 is cooled by the intermediate pressure refrigerant and the injection refrigerant. The intermediate pressure refrigerant and the injection refrigerant circulate through the second suction port 37 as the mixed refrigerant. Here, since the injection refrigerant has low temperature, in the compressor, it is possible to suitably suppress a temperature rise of the mixed refrigerant when the mixed refrigerant flows into the second impeller chamber 19 from the second suction port 37.

The injection refrigerant has high pressure compared with the refrigerant flowing into the first impeller chamber 17 from the first suction port 35 through the evaporator 104. Therefore, in the compressor, it is possible to increase the pressure of the mixed refrigerant flowing into the second suction port 37 from the first chamber 29a.

Therefore, the compressor in the embodiment has high durability and can surely improve efficiency of the refrigeration circuit.

In particular, in the compressor, in the fourth front housing 11d, the first and second communication paths 39a and 39b are formed in the axial direction of the housing 1. Therefore, in the compressor, even if the first and second communication paths 39a and 39b are provided to cause the first chamber 29a and the second chamber 29b to communicate with each other, it is possible to reduce a body diameter of the compressor. Further, in the compressor, the guide wall 41 is formed in the fourth front housing 11d. Therefore, in the compressor, it is possible to suitably guide the intermediate pressure refrigerant to the first and second communication paths 39a and 39b while suitably preventing the intermediate pressure refrigerant from directly flowing into the second suction port 37 after flowing into the first chamber 29a from the intermediate pressure port 31.

Further, in the compressor, since both of the first impeller 7 and the second impeller 9 have diameters smaller than the inner diameter of the motor chamber 29, it is possible to reduce the body diameter. Further, in the compressor, the first impeller 7 and the second impeller 9 are arranged with the large diameter portions 7a and 9a faced to each other. Therefore, in the compressor, a first thrust force generated on the first impeller 7 side and a second thrust force generated on the second impeller 9 side act to offset each other. A resultant force of the first and second thrust forces decreases. Therefore, in the compressor, it is possible to adopt the first and second thrust foil bearings 53a and 53b small in size and increase durability.

The present invention is explained above according to the embodiment. However, the present invention is not limited to the embodiment. It goes without saying that the present invention can be changed and applied as appropriate without departing from the gist of the present invention.

## Claims

1. A motor-driven turbo compressor used in a refrigeration cycle, comprising:
a housing;
an electric motor provided in the housing;
a rotating shaft driven to rotate by the electric motor; and
a first impeller and a second impeller arranged on the rotating shaft at an interval in an axial direction of the rotating shaft,
wherein a refrigerant is sucked from a first suction port, compressed by rotation of the first impeller, and discharged to a first discharge chamber provided on a radially outer circumference side of the first impeller, and
wherein the refrigerant through the first discharge chamber is sucked from a second suction port, compressed by rotation of the second impeller, and discharged to a second discharge chamber provided on a radially outer circumference side of the second impeller;
the compressor being **characterized in that**
the first impeller, the second impeller, and the electric motor are arranged in the axial direction of the rotating shaft in this order,
a first chamber and a second chamber are formed at both ends in the axial direction of the electric motor in the housing and communicate with each other via a gap in the electric motor, the first chamber being located close to the second impeller in the axial direction of the electric motor, and
an intermediate pressure port is formed in the housing and connects the first chamber and the first discharge chamber; and
an injection port connected to a gas-liquid separator of the refrigeration cycle is formed in the housing and communicates with the second chamber.

2. The motor-driven turbo compressor according to claim 1, wherein
the electric motor includes a rotor fixed to the rotating shaft and a stator fixed to the housing,
a communication path is formed between the housing and the stator and connects the first chamber and the second chamber in the axial direction, and
a guide wall that guides the refrigerant passed through the intermediate pressure port to the communication path is formed in the housing.

3. The motor-driven turbo compressor according to claim 2, wherein the injection port is configured not to face the communication path.

4. The motor-driven turbo compressor according to claim 3, wherein the injection port extends in a radial direction of the housing.

5. The motor-driven turbo compressor according to claim 3 or 4, wherein the injection port is located at a position different from the intermediate pressure port and the communication path around the axis of the rotating shaft.

6. The motor-driven turbo compressor according to any one of claims 1 to 5, wherein the second suction port is configured to lead the refrigerant to make contact with the rotating shaft.
